# EUROPEAN PATENT APPLICATION

(11) **EP 3 770 798 A1**
(43) Date of publication of application: **27.01.2021**
(21) Application number: 19187706.7
(22) Date of filing: 23.07.2019
(51) Int. Cl.: G06K 9/00

(54) **METHOD AND SYSTEM FOR IMPROVING DETECTION CAPABILITIES OF MACHINE LEARNING-BASED DRIVING ASSISTANCE SYSTEMS**

(71) Applicant: Continental Automotive GmbH, 30165 Hannover (DE)
(72) Inventor: Nicosevici, Tudor, 300328 Timisoara (RO)
(74) Representative: Reuter, Andreas

(57) **Abstract**

The invention relates to a method for improving detection capabilities of a detection algorithm of a driving assistance system, the method comprising the steps of:
- providing a vehicle-based driving assistance system comprising a processing entity implementing a detection algorithm for providing detection results, the driving assistance system comprising at least one sensor (2) for detecting static environment features in the surrounding of the vehicle (3) (S10);
- receiving sensor information regarding a static environment feature from the sensor (2) at a processing entity (4) of the vehicle (3) (S11);
- processing said received sensor information, thereby obtaining processed sensor information (S12);
- receiving at least one stored static environment feature from an environment data source (S13);
- comparing processed sensor information with said stored static environment feature (S14);
- determining if an inconsistency between processed sensor information and a stored static environment feature exists (S15); and
- if an inconsistency between processed sensor information and a stored static environment feature is determined, modifying the detection algorithm based on a machine-learning algorithm by providing training information derived from the comparison result of processed sensor information with said stored static environment feature to said machine-learning algorithm (S16).

## Description

The present invention relates generally to vehicle-based detection algorithms. More specifically, the invention relates to a method and a system for improving detection capabilities of a driving assistance system trained by machine learning algorithms.

With increasingly autonomous and intelligent transportation, the need of systems that enable the vehicles to understand better, more robust and more comprehensively their surroundings are required. A cornerstone of such systems is represented by ADAS sensors (ADAS: Advanced Driver Assistance System), that can reliably detect, measure and classify certain elements in the vehicle's environment (e.g. road elements, etc.). In this context, the latest developments in both hardware and software, have led to wide deployment of machine learning technologies in ADAS sensor functions.

While very powerful, one of the main challenges associated with machine learning systems is their training. During training, sets of examples are provided to the machine learning systems, allowing them to automatically learn certain particularities (such as texture, shapes, colors, etc.) of the features they are intended to extract.

The most crucial aspect is that sufficient examples with high variability need to be provided during training in order for the machine learning system to truly "understand" what is relevant and discriminative about a certain feature (e.g. shape and wheels in a vehicle, the silhouette of a pedestrian, etc.).

If the training is not properly done, with enough, diverse examples, the machine learning systems will extract irrelevant attributes for objects and phenomenon that fit the provided examples, but do not generalize well. This is called overfitting, and is this single most significant shortcoming, affecting the quality and robustness of machine learning systems.

In case of detection, classification, segmentation and localization applications, the training of machine learning systems mostly requires manually labeled data, leading to huge human efforts in providing sufficient training examples. This is especially the case for deep neural networks, where complex, powerful architectures, require hundreds of thousand or even millions of parameters to be trained.

In order to train such networks, tens of thousands of training examples are required in order to avoid overfitting and to build powerful machine learning systems.

Disadvantageously, to further increase performance of machine learning systems, huge amounts of additional training data are required, for relatively small improvements. This is impractical due to the limited availability of data and human effort required for labeling.

It is an objective of the embodiments of the invention to provide a method for improving detection capabilities of a machine-learned detection algorithm which significantly improves the detection performance of the machine-learned detection algorithm paired with limited training effort. The objective is solved by the features of the independent claims. Preferred embodiments are given in the dependent claims. If not explicitly indicated otherwise, embodiments of the invention can be freely combined with each other.

According to an aspect, the invention refers to a method for improving detection capabilities of a detection algorithm of a driving assistance system. The detection algorithm is a machine-learned detection algorithm, i.e. can be subsequently refined by machine learning. The method comprises the following steps:
First a vehicle-based driving assistance system is provided. The driving assistance system comprises a processing entity implementing a detection algorithm for providing detection results. The driving assistance system further comprises at least one sensor for detecting static environment features in the surrounding of the vehicle.

In a further step, the processing entity receives sensor information regarding a static environment feature from the sensor of the vehicle.

After receiving said sensor information, received sensor information is processed, thereby obtaining processed sensor information. Said processing may result in detection, classification and/or localization of environment features.

In addition, at least one stored static environment feature is received from an environment data source. The environment data source may be, for example, a map or a data source providing static environment features.

In a further step, processed sensor information is compared with received stored static environment feature. Said comparison may include a check if a characteristic of processed sensor information coincides with a characteristic of said stored static environment feature.

Based on said comparison, it is determined if an inconsistency between processed sensor information and a stored static environment feature exists. Said determination of an inconsistency may include if one or more characteristics of processed sensor information coincide with one or more characteristics of a static environment feature.

If an inconsistency between processed sensor information and a stored static environment feature is determined, the detection algorithm is modified based on a machine-learning algorithm by providing training information derived from the comparison result of processed sensor information with said stored static environment feature to said machine-learning algorithm. In this context, training information derived from the comparison result of processed sensor information with said stored static environment feature may be any information which is indicative for a misdetection or misclassification of a static environment feature. More specifically, training information may include at least partial information which has been provided by the sensor and preferably also additional information (also called "label") which gives an indication why said sensor information has been classified as being inconsistent, respectively, classified as being a misdetection or misclassification. The machine-learning algorithm may be, for example, an algorithm using a neural network, specifically a deep neural network.

Said method is advantageous because it is a much more efficient solution to detect situations where the machine-learned detection algorithm fails, such as false positives and negatives, wrong classifications, etc. and perform additional training using these samples. This greatly improves the precision of the machine-learning systems using relatively small amounts of data.

According to an embodiment, said stored static environment feature is information extracted from a map and/or is derived from information included in a map. Said map stores static environment features, like lane markers, road properties, crash barriers, traffic signs, traffic lights etc., in association with geographic positions, i.e. the map provides information which kind of static environment feature and, preferably also properties of said environment feature are located at a certain geographic position. Thereby it is possible to compare information captured by the sensor with information included in the map.

According to an embodiment, stored static environment feature from an environment data source is transformed from a first coordinate system in a second coordinate system, said second coordinate system being different to the first coordinate system and being a vehicle coordinate system in order to obtain a vehicle-coordinate-based stored static environment feature. The first coordinate system may be a coordinate system which is used in the environment data source, specifically in said map. Said transformation from first coordinate system to second coordinate system may be obtained using vehicle precise positioning information (e.g. high resolution GPS) and/or vehicle localization information. By means of said coordinate transformation it is possible to compare sensor information with static environment features from an environment data source because both refer to the same coordinate system.

According to an embodiment, the step of processing received sensor information comprises transforming said received sensor information from a sensor coordinate system in a vehicle coordinate system. Thereby, for example when using multiple sensors for detecting the environment in the surrounding of the vehicle, the sensor information can be fused and based on said sensor information, an environment model referring to a certain position within the vehicle (which may be the origin of the coordinate system) can be developed.

According to an embodiment, the step of processing received sensor information comprises detecting and/or classifying of static environment features. "Detecting" in this context means determining if a certain environment feature exists (e.g. lane marker exists or not). "Classifying" in this context means assigning the detected environment feature to one of multiple groups or classes (e.g. solid lane marker or dashed lane marker). Processing received sensor information may also encompass localization estimation of detected environment features, i.e. estimating the physical location of one or more static environment features with respect to the vehicle (referring to a vehicle coordinate system) or sensors (referring to a sensor coordinate system).

According to an embodiment, comparing processed sensor information with said stored static environment feature comprises comparing a detected and/or classified static environment feature with information included in a map, with information derived from a map and/or with information of a road model derived from a map. Thereby, it is possible to check whether the detection algorithm provided a detection result which matches with map information or information provided based on map information.

According to an embodiment, the vehicle comprises multiple sensors and information provided or derived from said sensors are fused in order to determine an environment model. Thereby, based on multiple sensors which may have a different detection area and which may use different detection technologies (camera, radar sensor, lidar sensor etc.) an improved environment model can be developed.

According to an embodiment, fused information derived from multiple sensors and map data are used to estimate the location and/or orientation of the vehicle. For example, the environment model developed based on multiple sensor information is compared with information included or derived from the map (map data). Based on said comparison it is possible to determine the geographic position and/or orientation of the vehicle. More specifically, said determination of geographic position and/or orientation may be more exact than based on global positioning system (GPS).

According to an embodiment, comparing processed sensor information with said stored static environment feature comprises associating road model features derived from a map and from position information of the vehicle with said processed sensor information. Using such road model improves the validation of processed sensor information, i.e. checking processed sensor information regarding inconsistencies can be performed with lower effort and/or with higher accuracy.

According to an embodiment, if an inconsistency is determined, training information is provided to a model training entity implementing a machine-learning algorithm, said training information comprising information regarding the processed sensor information and further information indicating details of inconsistency, so called "labels". A label may give an indication why certain processed sensor information has been classified as being a misdetection or misclassification. Thereby the detection algorithm can be modified based on information regarding misdetections and misclassifications which leads to significant improvements even at a limited number of improvement loops.

According to an embodiment, training information is filtered and/or validated in order to provide filtered/validated training samples. Thereby it is possible to double-check if a classification of processed sensor information as being a misdetection or misclassification is correct thereby avoiding a corruption of the system.

According to an embodiment, the model training entity is provided in a backend entity remote from the vehicle. Thereby, advantageously, a machine-learning algorithm can be performed by a computing entity comprising computing resources which are typically not available in the vehicle itself. However, if the vehicle comprises sufficient computing resources, of course, the machine-learning algorithm can also be performed within the vehicle.

According to an embodiment, model training entity modifies said detection algorithm using a machine learning algorithm based on training information, specifically, based on filtered/validated training samples. Thereby the detection algorithm is modified by machine-learning technology using information of detection cases which led to misdetection and/or misclassifications.

According to an embodiment, a modified detection algorithm is fed back into the vehicle in order to update detection algorithm performed in the vehicle. Thereby, the improved detection algorithm can be used for future detection purposes.

According to a further aspect, the invention relates to a system for improving detection capabilities of a detection algorithm of a driving assistance system. The system comprises at least one sensor for detecting static environment features in the surrounding of the vehicle, a processing entity and a model training entity. The processing entity is configured to:
- receive sensor information regarding a static environment feature from the sensor;
- receive at least one stored static environment feature from an environment data source;
- compare processed sensor information with said stored static environment feature;
- determine if an inconsistency between processed sensor information and a stored static environment feature exists;
- provide a training information comprising information of processed sensor information to said model training entity, if an inconsistency between processed sensor information and a stored static environment feature is determined.

The model training entity is further configured to modify the detection algorithm based on a machine-learning algorithm using said training information.

The term "vehicle" as used in the present disclosure may refer to a car, truck, bus, train or any other crafts.

The term "stored static environment features" may refer to features directly derived form an environment data source or may be features derived from information stored in an environment data source.

The term "environment data source" may refer to any data source providing information regarding environment features, specifically static environment features, for example a map, a data base etc.

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:
Fig. 1 shows a schematic illustration of a vehicle driving on a road and the detection area of a sensor provided at the vehicle;
Fig. 2 illustrates a block diagram of a system for improving detection capabilities of a detection algorithm based on machine learning technology; and
Fig. 3 shows a schematic block diagram illustrating the steps of a method for improving detection capabilities of a detection algorithm.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

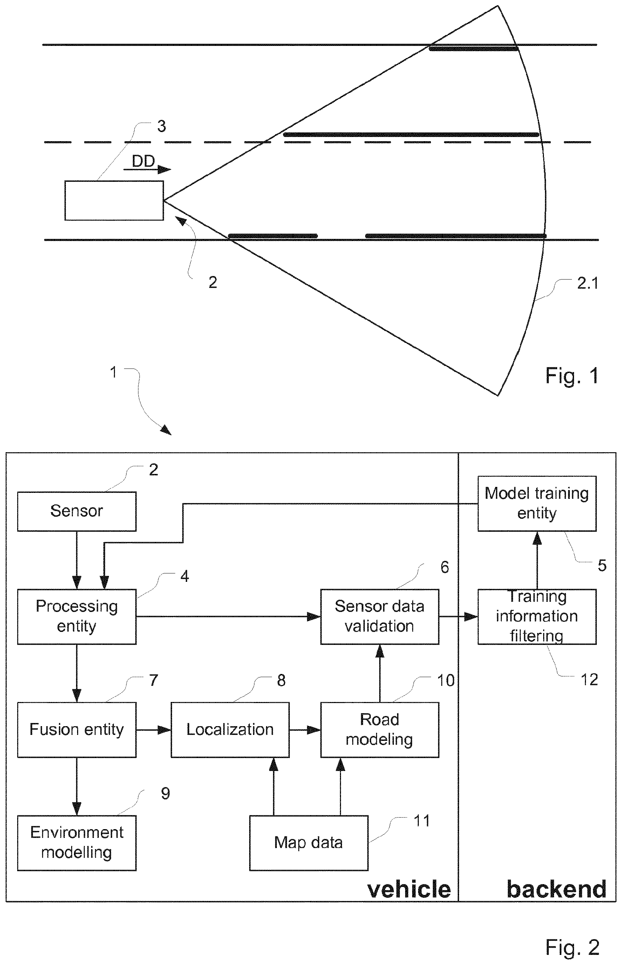

Fig. 1 shows a schematic top view on a vehicle 3 comprising a driving assistance system which is driving in driving direction DD. The driving assistance system comprises one or more sensors 2 in order to gather information of the surrounding of the vehicle 3 in order to assist the driver in manoeuvring and/or at least partially perform autonomous driving of the vehicle 3.

As shown in Fig. 1, the sensor 2 comprises a detection area 2.1 in which features of the environment surrounding the vehicle 3, in the following also referred to as environment features, can be captured. Specifically, the sensor 2 is designed to capture static environment features, i.e. environment features which do not move. Such environment features may be, for example, roads, buildings, guard rails, lane markers etc. The sensor 2 may be any sensor capable for capturing said static environment features, for example a camera, a radar sensor, a lidar sensor etc. As described in further detail below, also information of multiple sensors 2 can be used for capturing static environment features.

According to the example of Fig. 1, the sensor 2 is, for example, a forward looking camera configured to detect the lane markers of the road on which the vehicle 3 is moving. In the detection area 2.1 of the sensor, multiple bold lines are included. Said bold lines indicate lane markers detected by the sensor 2, respectively, a processing entity 4 coupled with the sensor 2.

The lane marker detections shown in Fig. 1 have to be compared with the actual lane markers provided on the road. The comparison illustrates multiple detection inconsistencies, namely an incorrect detection and a misclassification.

As shown in Fig. 1, the right lane marker is a solid lane marker without any gaps. However, the processing entity 4 detects two lane marker portions including a gap between said lane marker portions. As such, an incorrect detection, also referred to as misdetection, occurred, because a solid line marker is detected as including a gap.

Furthermore, the middle line marker in Fig. 1 has been classified incorrectly because the dashed line marker is detected as being a solid one. Therefore a misclassification occurred in the detection process of the processing entity 4.

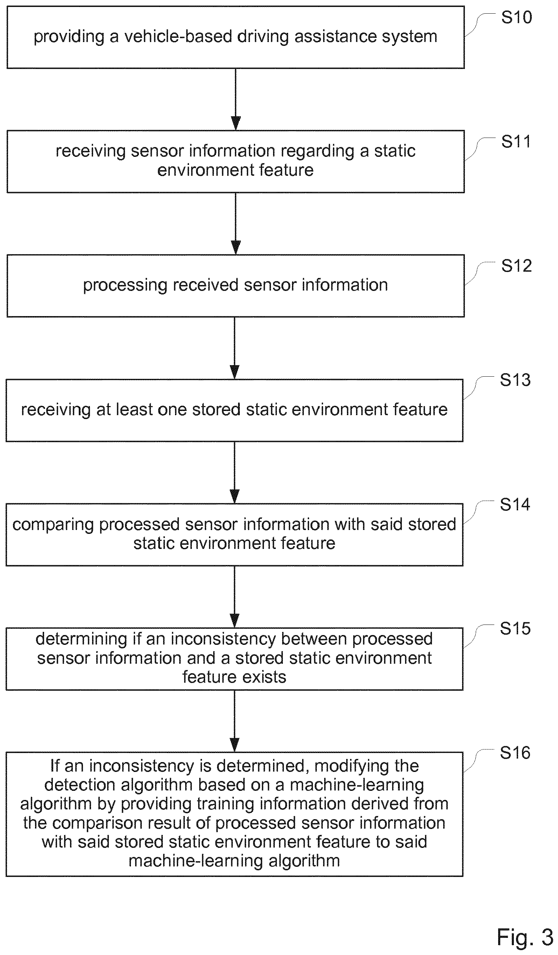

In the following, based on Fig. 2 and 3, a method and a system 1 for improving detection capabilities of a machine-learned detection algorithm of a vehicle-based driving assistance system is disclosed which uses detection inconsistencies in order to train the machine-learning system used for modifying the detection algorithm.

Fig. 2 shows a schematic block diagram of a system 1, the block diagram illustrating functional blocks, respectively, entities and the interaction of said functional blocks, respectively, entities for improving the detection capabilities of a machine-learned detection algorithm.

The basic principle is the determination of one or more detection inconsistencies by comparing detection results obtained from one or more sensors 2 and information regarding a static environment feature provided by an environment data source, e.g. a map. If the comparison shows a mismatch between a sensor-based detection result and a static environment feature provided by the environment data source, said sensor-based detection result is used as a test candidate or a test candidate is derived from said sensor-based detection result. Based on said test candidate, the detection algorithm is retained based on machine-learning technology in order to improve detection capabilities.

Referring again to Fig. 2, the sensor 2 provides information regarding detected environment features to a processing entity 4. In the following, only static environment features are considered for improving detection capabilities of the machine-learning detection algorithm. Said information may be raw sensor information or at least partially processed sensor information. Said information provided to and received by the processing entity 4 may refer to a sensor coordinate system, i.e. the position of a static environment feature included in said information provided by the sensor 2 may refer to a sensor-specific coordinate system which may be different to a vehicle-specific coordinate system.

After receiving said information regarding detected environment features at the processing entity 4, said processing entity 4 may process said information. Said processing may comprise data processing of received information in order to derive processed sensor information, also referred to as features. Said processing may comprise pattern recognition, classification and/or localization of recognized static environment features.

In addition, said information processing may comprise a coordinate transforming step. More in detail, the processing entity 4 may perform a coordinate system transformation of information received from the sensor 2, specifically, a transformation from a sensor-specific coordinate system to a vehicle-specific coordinate system. As such, the processed sensor information, respectively, features provided by the processing entity 4 do refer to the vehicle-specific coordinate system. Thereby, information from different sensors 2 refer to the same coordinate system and can be fused, respectively, superimposed.

Said processed sensor information, respectively, features are provided from the processing entity 4 to a sensor data validation entity 6. Said sensor data validation entity 6 may be configured to validate the received sensor information, respectively, features by checking said received sensor information, respectively, features against stored static environment features.

In a preferred embodiment, processed sensor information, respectively, features are provided from the processing entity 4 to a fusion entity 7. Said fusion entity 7 may receive processed sensor information of different sensors 2 and fuse said information in order to obtain fused sensor information. Said fused sensor information may comprise higher information content because information of different sensors is combined. Said fused sensor information can be used, for example, for determining the geographic position of the vehicle, specifically more exactly than based on a GPS sensor. Thus, fused sensor information is provided to a localization entity 8 which is configured to localize (i.e. determine the geographic position) the vehicle 3 based on said fused sensor information and static environment data provided by an environment data source 11, specifically a map and to provide geographic position information and orientation of the vehicle, also referred to as ego-pose data. Said geographic position information or ego-pose data may be provided according to a coordinate system defined by the environment data source 11, specifically the map, used to provide said static environment data.

Alternatively or in addition, also other techniques for precisely determining the position of the vehicle can be used, for example based on Differential Global Positioning System (DGPS).

According to an embodiment, the fusion entity 7 may also provide fused sensor information to an environment modelling entity 9. Said environment modelling entity 9 may be configured to develop an environment model of the environment surrounding the vehicle 3 based on said fused sensor information.

The localization entity 8 may provide geographic position information of the vehicle 3 to a road modelling entity 10. In addition, static environment data may be provided by the environment data source 11 to the road modelling entity 10. Said road modelling entity 10 is adapted to generate a road model. Said road model comprises map features, specifically road information. Said map features, specifically road information, may be provided to the sensor data validation entity 6 according to a vehicle-specific coordinate system. In other words, the sensor data validation entity 6 receives processed sensor information and map features, specifically road information, both in coordinates according to the vehicle domain.

The sensor data validation entity 6 may associate processed sensor information provided by the processing entity 4 with said map features, specifically road information, and check if there are inconsistencies or misdetections within processed sensor information. For example, the processing entity 4 may provide information regarding a road comprising lane markers and the sensor data validation entity 6 may check if the lane markers detected based on information provided by the sensor 4 coincide with the lane marker information included in information provided by the road modelling entity 10. Thereby, misdetections and/or misclassifications can be detected.

Upper-mentioned functional blocks and entities of system 1 are provided within the vehicle 3. In order to use computational resources with greater computational power than the computational resources available in the vehicle, the sensor data validation entity 6 may be coupled with backend hardware via a data link, preferably a wireless data link. The backend hardware may be a separate hardware apart from the vehicle 3. The data link may be permanently or quasi-permanently available or the data link may be only provided temporarily, e.g. in case of vehicle service etc.

The sensor data validation entity 6 may provide training information based on which the detection algorithm can be trained. Said training information may comprise information regarding processed sensor information which was classified as comprising a misdetection and/or misclassification. In addition, training information may comprise further information indicating details of inconsistency, i.e. information why certain detection has been classified as being a misdetection and/or misclassification. Furthermore, training information may, for example, comprise information regarding a map feature, specifically road information, which has been the basis for classifying the processed sensor information as being inconsistent.

Training information can be directly provided to a model training entity 5. Preferably, training information is provided through a filtering entity 12 in order to obtain filtered training information and said filtered training information is provided to the model training entity 5 in order to train the machine-learning detection algorithm based on said filtered training information. In other words, the filtering entity 12 provides an additional validation step which double-checks the training information. Thereby the risk of using incorrect training information for model training which may corrupt the training procedure with incorrect training samples can be reduced.

The model training entity 5 may use received training information, respectively, filtered/validated training information for improving the machine-learning model underlying the detection and classification algorithm. More in detail, the received (filtered/validated) training information may provide training candidates to the model training entity 5 which led to detection and/or classification failures (e.g. false positive or false negative detections) and which are therefore highly advantageous for improving the machine-learned detection algorithm.

After improving the model on which the detection algorithm is based, the model training entity 5 may provide an improved detection and classification model back to the vehicle 3. Said improved detection and classification model may be received at the processing entity 4 of the vehicle 3 and may then be implemented in order to process the information provided by the sensor 2 based on said improved detection and classification model. The detection and classification model may be transmitted to the vehicle 3 via a wireless communication channel available between the backend implementing said model retraining or may be implemented in the vehicle 3 during maintenance, e.g. during a firmware update.

Fig. 3 illustrates method steps which are performed for improving detection capabilities of a detection algorithm being updated by a machine-learning algorithm.

In step S10, a vehicle-based driving assistance system is provided.

In the following step S11, sensor information regarding a static environment feature is provided by the sensor 2 and received at the processing entity 4. Following up, sensor information is processed by the processing entity 4 (S12).

In addition, at least one stored static environment feature is received (S13).

Said processed sensor information is then compared with said stored static environment feature in order to obtain a comparison result (S14).

In the following, a determination step S15 is performed which checks if an inconsistency between said processed sensor information and said stored static environment feature exists.

If an inconsistency is determined, the detection algorithm to be performed in the processing entity of the vehicle is modified based on a machine-learning algorithm by providing training information derived from the comparison result of processed sensor information with said stored static environment feature to said machine-learning algorithm (S16).

It should be noted that the description and drawings merely illustrate the principles of the proposed invention. Those skilled in the art will be able to implement various arrangements that, although not explicitly described or shown herein, embody the principles of the invention.

### List of reference numerals

- 1: system
- 2: sensor
- 2.1: detection area
- 3: vehicle
- 4: processing entity
- 5: model training entity
- 6: sensor data validation entity
- 7: fusion entity
- 8: localization entity
- 9: environment modelling entity
- 10: road modelling entity
- 11: environment data source
- 12: filtering entity

- DD: driving direction

## Claims

1. Method for improving detection capabilities of a detection algorithm of a driving assistance system, the method comprising the steps of:
- providing a vehicle-based driving assistance system comprising a processing entity implementing a detection algorithm for providing detection results, the driving assistance system comprising at least one sensor (2) for detecting static environment features in the surrounding of the vehicle (3) (S10);
- receiving sensor information regarding a static environment feature from the sensor (2) at a processing entity (4) of the vehicle (3) (S11);
- processing said received sensor information, thereby obtaining processed sensor information (S12);
- receiving at least one stored static environment feature from an environment data source (S13);
- comparing processed sensor information with said stored static environment feature (S14);
- determining if an inconsistency between processed sensor information and a stored static environment feature exists (S15); and
- if an inconsistency between processed sensor information and a stored static environment feature is determined, modifying the detection algorithm based on a machine-learning algorithm by providing training information derived from the comparison result of processed sensor information with said stored static environment feature to said machine-learning algorithm (S16).

2. Method according to claim 1, wherein said stored static environment feature is information extracted from a map and/or is derived from information included in a map.

3. Method according to claim 1 or 2, wherein stored static environment feature from an environment data source is transformed from a first coordinate system in a second coordinate system, said second coordinate system being different to the first coordinate system and being a vehicle coordinate system in order to obtain a vehicle-coordinate-based stored static environment feature.

4. Method according to anyone of the preceding claims, wherein processing received sensor information comprises transforming said received sensor information from a sensor coordinate system in a vehicle coordinate system.

5. Method according to anyone of the preceding claims, wherein processing received sensor information comprises detecting, classifying and/or localizing of static environment features.

6. Method according to claim 5, wherein comparing processed sensor information with said stored static environment feature comprises comparing a detected, classified and/or localized static environment feature with information included in a map, with information derived from a map and/or with information of a road model derived from a map.

7. Method according to anyone of the preceding claims, wherein the vehicle (3) comprises multiple sensors (2) and information provided or derived from said sensors (2) are fused in order to determine an environment model.

8. Method according to claim 7, wherein fused information derived from multiple sensors (2) and map data are used to estimate the location and/or orientation of the vehicle (3).

9. Method according to anyone of the preceding claims, wherein comparing processed sensor information with said stored static environment feature comprises associating road model features derived from a map and position information of the vehicle (3) with said processed sensor information.

10. Method according to anyone of the preceding claims, wherein if an inconsistency is determined, training information is provided to a model training entity (5) implementing a machine-learning algorithm, said training information comprising information regarding the processed sensor information and further information indicating details of inconsistency.

11. Method according to claim 10, wherein training information is filtered and/or validated in order to provide filtered/validated training samples.

12. Method according to claim 10 or 11, wherein model training entity (5) is provided in a backend entity remote from the vehicle (3).

13. Method according to anyone of claims 10 to 12, wherein model training entity (5) modifies said detection algorithm using a machine learning algorithm based on training information, specifically, based on filtered/validated training samples.

14. Method according to claim 13, wherein a modified detection algorithm is fed back into the vehicle (3) in order to update detection algorithm performed in the vehicle (3).

15. System for improving detection capabilities of a detection algorithm of a driving assistance system, the system comprising at least one sensor (2) for detecting static environment features in the surrounding of the vehicle (3), a processing entity (4) and a model training entity (5), wherein the processing entity (4) is configured to:
- receive sensor information regarding a static environment feature from the sensor (2);
- receive at least one stored static environment feature from an environment data source;
- compare processed sensor information with said stored static environment feature;
- determine if an inconsistency between processed sensor information and a stored static environment feature exists;
- provide a training information comprising information of processed sensor information to said model training entity (5) if an inconsistency between processed sensor information and a stored static environment feature is determined;
the model training entity (5) being configured to modify the detection algorithm based on a machine-learning algorithm using said training information.
